# EUROPEAN PATENT SPECIFICATION

(11) **EP 2 500 961 B1**
(45) Date of publication and mention of the grant of the patent: **26.07.2017**
(21) Application number: 11165647.6
(22) Date of filing: 11.05.2011
(51) Int. Cl.: H01M 2/10

(54) **Housing arrangement for an electrical energy storage**
Gehäuseanordnung für einen elektrischen Energiespeicher
Agencement de boîtier pour stockage d'énergie électrique

(30) Priority: 15.03.2011 DE 102011013969
(43) Date of publication of application: 19.09.2012
(73) Proprietor: Johnson Controls Automotive Electronics GmbH, 75196 Remchingen (DE)
(72) Inventor: Bieletzki-Welz, Viktor, 42799, Leichlingen (DE); Kolimechkov, Georgi, 1582, Sofia (BG); Ivanov, Stoyan, 1715, Sofia (BG); Ohler, Jens, 75249, Kieselbronn (DE); Langer, Peter, 76137, Karlsruhe (DE); Noel, Christian, 95220, Herblay (FR)
(74) Representative: Liedtke, Markus

(56) References cited:
- EP-A1- 0 074 227
- EP-A2- 0 368 597

## Description

The invention relates to a housing arrangement for an electrical energy storage.

Electrical energy storage of different size and shape known in the art use a respective separate housing which is shaped correspondingly to the respective electrical energy storage.

US 4,431,717 discloses a battery case for selectively housing batteries of different sizes having a housing dimensioned to receive the largest of the batteries and provided with an opening through which the batteries are insertable into the housing. A battery holder is movable in the housing in the direction toward and away from the opening to effectively vary the space available in the housing for accommodating a battery between the holder and a lid which is engageable in the opening for closing the housing. Locking arms are pivotally mounted at the opposite sides of the housing and are selectively engageable with the holder for determining the positions of the latter relative to the housing, and battery size detectors are integral with the locking arms and project into the housing for engagement by a battery inserted therein so as to position the locking arms, and hence the holder, in dependence on the size of the inserted battery.

It is the object of the present invention to provide a housing arrangement for an electrical energy source which is improved with respect to the prior art.

The object is achieved by a housing arrangement according to claim 1.

Advantageous embodiments are subject of the dependent claims.

According to the invention the object is achieved by a housing arrangement for an electrical energy storage, wherein at least one first holding element is arranged on the electrical energy storage in a circumferential direction.
The at least one first holding element surrounds the electrical energy storage in a pitch circle manner and in sections in a positive and/or non-positive locking manner. A second holding element is arranged on a front face of the electrical energy storage. The second holding element acts on the electrical energy storage by means of a front face moulding in a positive and/or non-positive locking manner. The first and second holding elements are respectively tongue-shaped and at least in sections resilient. A respective tolerance compensation element is arrangeable between a housing wall and a free end of the respective holding element in such a manner that the tolerance compensation element may be supported at the housing wall. Thus a retaining force may be applied by the tolerance compensation element to the respective first holding element, resulting in a positive and/or non-positive locking of the respective holding element on the electrical energy storage.

This allows in an advantageous manner to provide a housing arrangement for receiving electrical energy storages with different sizes and shapes, wherein the housing arrangement may variably be adapted to the electrical energy storage to be received by means of differently shaped tolerance compensation elements.

In this advantageous manner only a single casting mould is required for producing the housing arrangement, thus reducing a number of different components which have to be provided for manufacturing. The manufacturing process is thus significantly simplified and costs are reduced.

The housing arrangement may comprise a holding bay having an internal space for receiving the electrical energy storage and arranged to have its top side reversibly covered with a covering element.

A catch may be arranged on the covering element for establishing a detent lock between the covering element and the housing arrangement.

A lower side of the holding bay facing away from the covering element may be confined by a holding section which has a surface facing the internal space of the holding bay, wherein the surface is shaped as a plane or corresponding to an outer perimeter of the electrical energy storage.

A holding section may be moulded in or integrally moulded with a lateral wall of the holding bay, wherein the lateral wall may be arranged as an outer wall of the housing arrangement, wherein a surface of the lateral wall facing the internal space of the holding bay is shaped as a plane or corresponding to an outer perimeter of the electrical energy storage. The surface of the lateral wall may be arranged as a pitch circle shaped or a rounded elevated moulding.

At the free end a catch may be moulded, which is directed towards the internal space of the holding bay, wherein in the region of the free end of the first holding element a housing wall is arranged on the side facing away from the internal space of the holding bay, wherein the housing wall and the free end of the first holding element are spaced from each other.

The elevated moulding of the holding section and the catch of the first holding element may be arranged relative to each other and to the holding section in such a manner, that the elevated moulding and the catch act on the electrical energy storage in the region of an upper semi-circle, while the holding section acts on a lower semi-circle.

Thus the electrical energy storage is held in the circumferential direction between the elevated moulding, the catch and the holding section in a non-positive and/or positive locked manner.

The tolerance compensation element may be essentially clip-shaped comprising a first leg and a second leg, which are coupled through a base, the first leg of the tolerance compensation element arranged to be supported at the housing wall, wherein the leg and the housing wall are shaped correspondingly in their contact region, wherein the second leg acts on the free end of the first holding element, wherein the second leg and the free end are shaped correspondingly in their contact region.

The legs of the tolerance compensation element may be positively and/or non-positively locked to the covering element with their side pointing away from the base.

Thus the tolerance compensation element is held between the covering element and the housing wall in such a manner, that a retaining force from the tolerance compensation element may be applied to the first holding element, wherein this retaining force acts in the circumferential direction of the electrical energy storage and results in a positive and/or non-positive lock of the first holding element or at least the catch to the electrical energy storage.

The tolerance compensation element is therefore easily replaceable and may be adapted with respect to its shape, in particular a width at the base, to the electrical energy storage to be received in the housing arrangement.

In the region of a second front face of the electrical energy storage a second holding element may be moulded in or integrally moulded with the holding section of the holding bay, wherein the second holding element is at least in sections resilient and projects in the shape of a tongue with a free end towards the covering element, wherein at the free end a catch is moulded, which is directed towards the second front face of the electrical energy storage.

Thus, in service, the electrical energy storage is held in the housing arrangement in the longitudinal direction between the catches and in a positively and/or non-positively locked manner.

In a service position of the housing arrangement with closed covering element an additional tolerance compensation element may be arranged in a positively and/or non-positively locked manner on an elevated moulding of the covering elements, wherein the additional tolerance compensation element may be essentially clip-shaped comprising a first leg and a second leg, which are coupled through a base, wherein in the service position the additional tolerance compensation element is mounted onto the elevated moulding in such a manner, that the elevated moulding is arranged between the legs.

Thus the first leg of the tolerance compensation element acts on the free end of the second holding element and applies a force in the longitudinal direction of the electrical energy storages to the second holding element. This force results in a positive and/or non-positive lock of the second holding elements or at least the catch to the second front face of the electrical energy storage.

In the following the invention is described in more detail with reference to the attached schematic figures.
- Figure 1: is a schematic front view of a housing arrangement with a first electrical energy storage,
- Figure 2: is a schematic front view of a housing arrangement with an alternative embodiment of the electrical energy storage, and
- Figure 3: is a schematic lateral view of a housing arrangement with an electrical energy storage.

Corresponding parts are marked with the same reference signs in all figures.

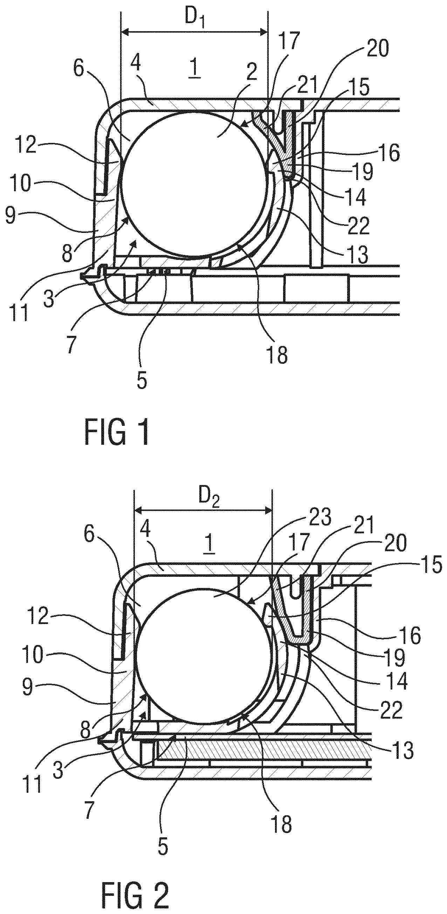

Figure 1 is a schematic front view of a housing arrangement 1 with a first electrical energy storage 2. The first electrical energy storage 2 is preferably a conventional single galvanic cell, e.g. a primary cell, which has a cylindrical shape and a circular cross section. A diameter D₁ of the first electrical energy storage 2 is maximized, i.e. the first electrical energy storage 2 exhibits a diameter D₁ equalling the greatest diameter which may be received within the housing arrangement 1.

The housing arrangement 1 is preferably a part or a section of a housing of an electrical arrangement, e.g. a remote control for a vehicle and arranged within the respective housing. The housing arrangement 1 comprises a conventional holding bay 3 having an internal space 6 for receiving the electrical energy storage 2 and arranged to have its top side reversibly covered with a conventional covering element 4. For this purpose a catch (not illustrated) may be arranged on the covering element 4, the catch arranged to establish a detent lock between the covering element 4 and the housing arrangement 1.

The lower side of the holding bay 3, i.e. the side pointing away from the covering element 4 is confined by a holding section 5 which has a surface 7 pointing towards the internal space 6 of the holding bay 3. The surface 7 is shaped as a plane or corresponding to an outer perimeter 8 of the electrical energy storage 2.

A holding section 10 is moulded in or integrally moulded with a lateral wall 9 of the holding bay 3, wherein the lateral wall 9 may be arranged as an outer wall of the housing arrangement 1. A surface 11 of the lateral wall 9 pointing towards the internal space 6 of the holding bay 3 is shaped as a plane or corresponding to an outer perimeter 8 of the electrical energy storage 2, e.g. as a pitch circle shaped or a rounded elevated moulding 12.

A first holding element 13 is moulded in or integrally moulded with the side of the holding section 5 pointing away from the lateral wall 9. This first holding element 13 is preferably shaped as a pitch circle and projects in the shape of a tongue with a free end towards the covering element 4. At the free end 14 a catch is moulded, which is directed towards the internal space 6 of the holding bay 3. The first holding element 13 is at least in sections resilient.

In the region of the free end 14 of the first holding element 13 a housing wall 16 is arranged on the side pointing away from the internal space 6 of the holding bay 3, wherein the housing wall 16 and the free end 14 of the first holding element 13 are spaced from each other.

The elevated moulding 12 of the holding section 10 and the catch 15 of the first holding element 13 are arranged relative to each other and to the holding section 5 in such a manner, that the elevated moulding 12 and the catch 15 act on the electrical energy storage 2 in the region of an upper semi-circle 17, while the holding section 5 acts on a lower semi-circle 18. Thus the electrical energy storage 2 is held in the circumferential direction between the elevated moulding 12, the catch 15 and the holding section 5 in a non-positive and/or positive locked manner.

In a service position of the housing arrangement 1 with closed covering element 4 a tolerance compensation element 19 is arranged between the housing wall 16 and the free end 14 of the first holding element 13. The tolerance compensation element 19 is essentially clip-shaped and comprises a first leg 20 and a second leg 21, which are coupled through a base 22. The first leg 20 of the tolerance compensation element 19 may be supported at the housing wall 16, wherein the leg 20 and the housing wall 16 are shaped correspondingly in their contact region. The second leg 21 acts on the free end 14 of the first holding element 13, wherein the second leg 21 and the free end 14 are shaped correspondingly in their contact region.

The legs 20, 21 of the tolerance compensation element 19 are positively and/or non-positively locked to the covering element 4 with their side pointing away from the base 22. Thus the tolerance compensation element 19 is held between the covering element 4 and the housing wall 16 in such a manner, that a retaining force from the tolerance compensation element 19 may be applied to the first holding element 13, wherein this retaining force acts in the circumferential direction of the electrical energy storage 2 and results in a positive and/or non-positive lock of the first holding element 13 or at least the catch 15 to the electrical energy storage 2.

The tolerance compensation element 19 is therefore easily replaceable and may be adapted in its shape, in particular a width at the base 2, to the electrical energy storage 2 to be received in the housing arrangement 1.

Figure 2 is a schematic front view of the housing arrangement 1 with an alternative embodiment of an electrical energy storage 23. This alternative electrical energy storage 23 exhibits a diameter D₂ which is reduced with respect to the diameter D₁ of the electrical energy storages 2.

The base 22 of the tolerance compensation element 19 is increased with respect to the embodiment illustrated in figure 1, so that the resilient free end 14 of the first holding element 13 may be arranged towards the alternative electrical energy storage 23 and a positive and/or non-positive lock between the first holding element 13 or at least the catch 15 and the electrical energy storage 2 may be established.

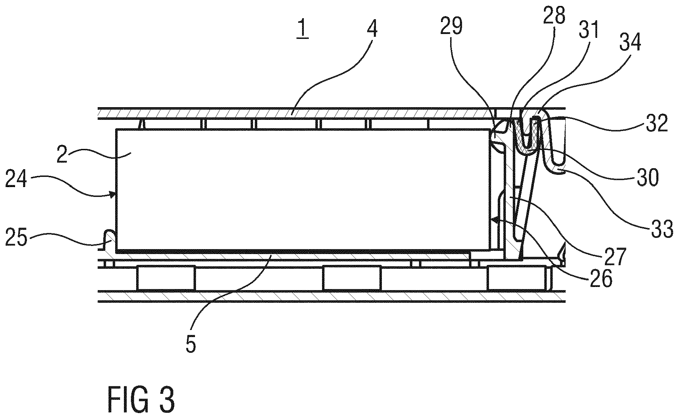

Figure 3 is a schematic lateral view of the housing arrangement 1 with the electrical energy storage 2. The electrical energy storage 2 is held at its first front face 24 by means of an additional catch 25.

In the region of a second front face 26 of the electrical energy storage 2 a second holding element 27 is moulded in or integrally moulded with the holding section 5 of the holding bay. The second holding element 27 is at least in sections resilient and projects in the shape of a tongue with a free end 28 towards the covering element 4. At the free end 28 a catch 29 is moulded, which is directed towards the second front face 26 of the electrical energy storage 2. Thus, in service, the electrical energy storage 2 is held in the housing arrangement 1 in the longitudinal direction between the catches 25 and 29 in a positively and/or non-positively locked manner.

In the service position of the housing arrangement 1 with closed covering element 4 an additional tolerance compensation element 30 is arranged in a positively and/or non-positively locked manner on an elevated moulding 34 of the covering elements 4. The additional tolerance compensation element 30 is essentially clip-shaped and comprises a first leg 31 and a second leg 32, which are coupled through a base 33. In the service position the additional tolerance compensation element 30 is mounted onto the elevated moulding 34 in such a manner, that the elevated moulding 34 is arranged between the legs 31 and 32. Thus the first leg 31 of the tolerance compensation element 30 acts on the free end 28 of the second holding element 27 and applies a force in the longitudinal direction of the electrical energy storages 2 to the second holding element 27. This force results in a positive and/or non-positive lock of the second holding elements 27 or at least the catch 29 to the second front face 26 of the electrical energy storage 2.

The housing arrangement 1 may be variably adapted to electrical energy storages of different length by varying a width of the first leg 31 of the tolerance compensation element 30.

Thus, in an advantageous manner, the housing arrangement 1 may receive electrical energy storages having different lengths and diameters by means of respectively shaped tolerance compensation elements 19 and 30.

### List of References

- 1: Housing arrangement
- 2: Electrical energy storage
- 3: Holding bay
- 4: Covering element
- 5: Holding section
- 6: Internal space
- 7: Surface
- 8: Outer perimeter
- 9: Lateral wall
- 10: Holding section
- 11: Surface
- 12: Elevated moulding
- 13: First holding element
- 14: Free end
- 15: catch
- 16: housing wall
- 17: upper semi-circle
- 18: lower semi-circle
- 19: tolerance compensation element
- 20: first leg
- 21: second leg
- 22: base
- 23: alternative electrical energy storage
- 24: first front face
- 25: additional catch
- 26: second front face
- 27: second holding element
- 28: free end
- 29: catch
- 30: additional tolerance compensation element
- 31: first leg
- 32: second leg
- 33: base
- 34: elevated moulding
- D₁, D₂: diameter

## Claims

1. Housing arrangement (1) for an electrical energy storage (2) having a cylindrical shape and a circular cross section, wherein at least one first holding element (13) is arranged on the electrical energy storage (2) in a circumferential direction, the at least one first holding element (13) surrounding the electrical energy storage (2) in a pitch circle manner and in sections in a positive and/or non-positive locking manner, wherein a second holding element (27) is arranged on a front face (24, 26) of the electrical energy storage (2), the second holding element (27) having a moulding arranged to act on a front face (24, 26) of the electrical energy storage (2) in a positive and/or non-positive locking manner, wherein the first and second holding elements (13, 27) are respectively tongue-shaped and at least in sections resilient, wherein a respective tolerance compensation element (19, 30) is arranged between a housing wall (16) and a free end (14, 28) of the respective holding element (13, 27) in such a manner that the tolerance compensation element (19, 30) is supported at the housing wall (16).

2. Housing arrangement (1) according to claim 1, **characterized in** a holding bay (3) having an internal space (6) for receiving the electrical energy storage (2) and arranged to have its top side reversibly covered with a covering element (4).

3. Housing arrangement (1) according to claim 2, **characterized in that** a catch is arranged on the covering element (4) for establishing a detent lock between the covering element (4) and the housing arrangement (1).

4. Housing arrangement (1) according to one of the claims 2 or 3, **characterized in that** a lower side of the holding bay (3) facing away from the covering element (4) is confined by a holding section (5) which has a surface (7) facing the internal space (6) of the holding bay (3), wherein the surface (7) is shaped as a plane or corresponding to an outer perimeter (8) of the electrical energy storage (2).

5. Housing arrangement (1) according to one of the claims 2 to 4, **characterized in that** a holding section (10) is moulded in or integrally moulded with a lateral wall (9) of the holding bay (3), wherein the lateral wall (9) is arranged as an outer wall of the housing arrangement (1), wherein a surface (11) of the lateral wall (9) facing the internal space (6) of the holding bay (3) is shaped as a plane or corresponding to an outer perimeter (8) of the electrical energy storage (2).

6. Housing arrangement (1) according to claim 5, **characterized in that** the surface (11) is a pitch circle shaped or a rounded elevated moulding (12).

7. Housing arrangement (1) according to one of the claims 2 to 6, **characterized in that** at the free end (14) a catch is moulded, which is directed towards the internal space (6) of the holding bay (3), wherein in the region of the free end (14) of the first holding element (13) a housing wall (16) is arranged on the side facing away from the internal space (6) of the holding bay (3), wherein the housing wall (16) and the free end (14) of the first holding element (13) are spaced from each other.

8. Housing arrangement (1) according to one of the claims 6 or 7, **characterized in that** the elevated moulding (12) of the holding section (10) and the catch (15) of the first holding element (13) are arranged relative to each other and to the holding section (5) in such a manner, that the elevated moulding (12) and the catch (15) act on the electrical energy storage (2) in the region of an upper semi-circle (17), while the holding section (5) acts on a lower semi-circle (18).

9. Housing arrangement (1) according to one of the preceding claims, **characterized in that** the tolerance compensation element (19) is essentially clip-shaped and comprises a first leg (20) and a second leg (21), which are coupled through a base (22), the first leg (20) of the tolerance compensation element (19) arranged to be supported at the housing wall (16), wherein the leg (20) and the housing wall (16) are shaped correspondingly in their contact region, wherein the second leg (21) acts on the free end (14) of the first holding element (13), wherein the second leg (21) and the free end (14) are shaped correspondingly in their contact region.

10. Housing arrangement (1) according to claim 9, **characterized in that** the legs (20, 21) of the tolerance compensation element (19) are positively and/or non-positively locked to the covering element (4) with their side pointing away from the base (22).

11. Housing arrangement (1) according to one of the preceding claims, **characterized in that** in the region of a second front face (26) of the electrical energy storage (2) a second holding element (27) is moulded in or integrally moulded with the holding section (5) of the holding bay (3), wherein the second holding element (27) is at least in sections resilient and projects in the shape of a tongue with a free end (28) towards the covering element (4), wherein at the free end (28) a catch (29) is moulded, which is directed towards the second front face (26) of the electrical energy storage (2).

12. Housing arrangement (1) according to one of the claims 2 to 11, **characterized in that** in a service position of the housing arrangement (1) with closed covering element (4) an additional tolerance compensation element (30) is arranged in a positively and/or non-positively locked manner on an elevated moulding (34) of the covering element (4), wherein the additional tolerance compensation element (30) is essentially clip-shaped and comprises a first leg (31) and a second leg (32), which are coupled through a base (33), wherein in the service position the additional tolerance compensation element (30) is mounted onto the elevated moulding (34) in such a manner, that the elevated moulding (34) is arranged between the legs (31, 32).

## Patentansprüche

1. Gehäuseanordnung (1) für einen elektrischen Energiespeicher (2), der eine zylindrische Form und einen kreisförmigen Querschnitt aufweist, wobei mindestens ein erstes Halteelement (13) in einer Umfangsrichtung auf dem elektrischen Energiespeicher (2) angeordnet ist, wobei das mindestens eine erste Halteelement (13) den elektrischen Energiespeicher (2) teilkreisartig und in Abschnitten in einer formschlüssigen und/oder kraftschlüssigen Verriegelungsweise umgibt, wobei ein zweites Halteelement (27) auf einer Vorderfläche (24, 26) des elektrischen Energiespeichers (2) angeordnet ist, wobei das zweite Halteelement (27) ein Formteil aufweist, das so angeordnet ist, dass es in einer formschlüssigen und/oder kraftschlüssigen Verriegelungsweise auf eine Vorderfläche (24, 26) des elektrischen Energiespeichers (2) wirkt, wobei die ersten und zweiten Halteelemente (13, 27) jeweils zungenförmig und mindestens in Abschnitten elastisch sind, wobei ein jeweiliges Toleranzausgleichselement (19, 30) zwischen einer Gehäusewand (16) und einem freien Ende (14, 28) des jeweiligen Halteelements (13, 27) derart angeordnet ist, dass das Toleranzausgleichselement (19, 30) an der Gehäusewand (16) gehalten wird.

2. Gehäuseanordnung (1) nach Anspruch 1, die durch eine Haltebucht (3), die einen Innenraum (6) zum Aufnehmen des elektrischen Energiespeichers (2) aufweist, gekennzeichnet ist und so angeordnet ist, dass ihre Oberseite mit einem Abdeckelement (4) reversibel abgedeckt wird.

3. Gehäuseanordnung (1) nach Anspruch 2, **dadurch gekennzeichnet, dass** eine Rastnase auf dem Abdeckelement (4) angeordnet ist, um einen Rastverschluss zwischen dem Abdeckelement (4) und der Gehäuseanordnung (1) herzustellen.

4. Gehäuseanordnung (1) nach einem der Ansprüche 2 oder 3, **dadurch gekennzeichnet, dass** eine untere Seite der Haltebucht (3), die von dem Abdeckelement (4) weg zeigt, durch einen Halteabschnitt (5) begrenzt ist, der eine Fläche (7) aufweist, die dem Innenraum (6) der Haltebucht (3) zugewandt ist, wobei die Fläche (7) als eine Ebene oder entsprechend einem Außenumfang (8) des elektrischen Energiespeichers (2) geformt ist.

5. Gehäuseanordnung (1) nach einem der Ansprüche 2 bis 4, **dadurch gekennzeichnet, dass** ein Halteabschnitt (10) in oder einstückig mit einer Seitenwand (9) der Haltebucht (3) geformt ist, wobei die Seitenwand (9) als eine Außenwand der Gehäuseanordnung (1) angeordnet ist, wobei eine Fläche (11) der Seitenwand (9), die dem Innenraum (6) der Haltebucht (3) zugewandt ist, als eine Ebene oder entsprechend einem Außenumfang (8) des elektrischen Energiespeichers (2) geformt ist.

6. Gehäuseanordnung (1) nach Anspruch 5, **dadurch gekennzeichnet, dass** die Fläche (11) ein teilkreisförmiges oder ein rundliches erhöhtes Formteil (12) ist.

7. Gehäuseanordnung (1) nach einem der Ansprüche 2 bis 6, **dadurch gekennzeichnet, dass** an dem freien Ende (14) eine Rastnase geformt ist, die in Richtung des Innenraums (6) der Haltebucht (3) ausgerichtet ist, wobei in dem Bereich des freien Endes (14) des ersten Halteelements (13) eine Gehäusewand (16) auf der Seite, die von dem Innenraum (6) der Haltebucht (3) weg zeigt, angeordnet ist, wobei die Gehäusewand (16) und das freie Ende (14) des ersten Halteelements (13) voneinander beabstandet sind.

8. Gehäuseanordnung (1) nach einem der Ansprüche 6 oder 7, **dadurch gekennzeichnet, dass** das erhöhte Formteil (12) des Halteabschnitts (10) und die Rastnase (15) des ersten Halteelements (13) in Bezug aufeinander und auf den Halteabschnitt (5) derart angeordnet sind, dass das erhöhte Formteil (12) und die Rastnase (15) auf den elektrischen Energiespeicher (2) in dem Bereich eines oberen Halbkreises (17) wirken, während der Halteabschnitt (5) auf einen unteren Halbkreis (18) wirkt.

9. Gehäuseanordnung (1) nach einem der vorhergehenden Ansprüche, **dadurch gekennzeichnet, dass** das Toleranzausgleichselement (19) im Wesentlichen klammerförmig ist und einen ersten Schenkel (20) und einen zweiten Schenkel (21) aufweist, die durch einen Sockel (22) verbunden sind, wobei der erste Schenkel (20) des Toleranzausgleichselements (19) so angeordnet ist, dass er an der Gehäusewand (16) gehalten wird, wobei der Schenkel (20) und die Gehäusewand (16) in ihrem Kontaktbereich einander entsprechend geformt sind, wobei der zweite Schenkel (21) auf das freie Ende (14) des ersten Halteelements (13) wirkt, wobei der zweite Schenkel (21) und das freie Ende (14) in ihrem Kontaktbereich einander entsprechend geformt sind.

10. Gehäuseanordnung (1) nach Anspruch 9, **dadurch gekennzeichnet, dass** die Schenkel (20, 21) des Toleranzausgleichselements (19) formschlüssig und/oder kraftschlüssig an dem Abdeckelement (4) verriegelt sind, wobei ihre Seite von dem Sockel (22) weg zeigt.

11. Gehäuseanordnung (1) nach einem der vorhergehenden Ansprüche, **dadurch gekennzeichnet, dass** in dem Bereich einer zweiten Vorderfläche (26) des elektrischen Energiespeichers (2) ein zweites Halteelement (27) in oder einstückig mit dem Halteabschnitt (5) der Haltebucht (3) geformt ist, wobei das zweite Halteelement (27) mindestens in Abschnitten elastisch ist und in Form einer Zunge mit einem freien Ende (28) in Richtung des Abdeckelements (4) hervorsteht, wobei an dem freien Ende (28) eine Rastnase (29) geformt ist, die in Richtung der zweiten Vorderfläche (26) des elektrischen Energiespeichers (2) ausgerichtet ist.

12. Gehäuseanordnung (1) nach einem der Ansprüche 2 bis 11, **dadurch gekennzeichnet, dass** in einer Betriebsstellung der Gehäuseanordnung (1), in der das Abdeckelement (4) geschlossen ist, ein zusätzliches Toleranzausgleichselement (30) in einer formschlüssig und/oder kraftschlüssig verriegelten Weise auf einem erhöhten Formteil (34) des Abdeckelements (4) angeordnet ist, wobei das zusätzliche Toleranzausgleichselement (30) im Wesentlichen klammerförmig ist und einen ersten Schenkel (31) und einen zweiten Schenkel (32) aufweist, die durch einen Sockel (33) verbunden sind, wobei in der Betriebsstellung das zusätzliche Toleranzausgleichselement (30) auf dem erhöhten Formteil (34) derart befestigt ist, dass das erhöhte Formteil (34) zwischen den Schenkeln (31, 32) angeordnet ist.

## Revendications

1. Agencement de boîtier (1) pour un stockage d'énergie électrique (2) ayant une forme cylindrique et une section transversale circulaire, dans lequel au moins un premier élément de retenue (13) est disposé sur le stockage d'énergie électrique (2) dans une direction circonférentielle, le ou les premiers éléments de retenue (13) entourant le stockage d'énergie électrique (2) par cercle primitif et en sections de force et/ou par complémentarité de forme,
dans lequel un second élément de retenue (27) est disposé sur une face avant (24, 26) du stockage d'énergie électrique (2), le second élément de retenue (13) ayant un moulage conçu de sorte à agir sur une face avant (24, 26) du stockage d'énergie électrique (2) de force et/ou par complémentarité de forme, dans lequel les premier et second éléments de retenue (13, 27) se présentent respectivement sous la forme d'une languette et comportent au moins des sections élastiques, dans lequel un élément de compensation de tolérance respectif (19, 30) est disposé entre une paroi de boîtier (16) et une extrémité libre (14, 28) de l'élément de retenue respectif (13, 27) de telle manière que l'élément de compensation de tolérance (19, 30) soit supporté sur la paroi de boîtier (16).

2. Agencement de boîtier (1) selon la revendication 1, **caractérisé en ce qu'**un renfoncement de retenue (3) comporte un espace interne (6) pour recevoir le stockage d'énergie électrique (2) et est conçu pour avoir son côté supérieur recouvert de manière réversible avec un élément de recouvrement (4).

3. Agencement de boîtier (1) selon la revendication 2, caractérisé en qu'un loquet est disposé sur l'élément de recouvrement (4) pour établir un verrouillage à cliquet entre l'élément de recouvrement (4) et l'agencement de boîtier (1).

4. Agencement de boîtier (1) selon l'une des revendications 2 ou 3, **caractérisé en ce qu'**un côté inférieur du renfoncement de retenue (3) à l'opposé de l'élément de recouvrement (4) est confiné par une section de retenue (5) qui comporte une surface (7) faisant face à l'espace interne (6) du renfoncement de retenue (3), dans lequel la surface (7) se présente sous la forme d'un plan ou correspond à un périmètre externe (8) du stockage d'énergie électrique (2).

5. Agencement de boîtier (1) selon l'une des revendications 2 à 4, **caractérisé en ce qu'**une section de retenue (10) est moulée dans une paroi latérale (9) du renfoncement de retenue (3), ou est moulée d'un seul tenant avec celle-ci, dans lequel la paroi latérale (9) est conçue sous la forme d'une paroi externe de l'agencement de boîtier (1), dans lequel une surface (11) de la paroi latérale (9) faisant face à l'espace interne (6) du renfoncement de retenue (3) se présente sous la forme d'un plan ou correspond à un périmètre externe (8) du stockage d'énergie électrique (2).

6. Agencement de boîtier (1) selon la revendication 5, **caractérisé en ce que** la surface (11) est un moulage en forme de cercle primitif ou surélevé arrondi (12).

7. Agencement de boîtier (1) selon l'une des revendications 2 à 6, **caractérisé en ce que**, au niveau de l'extrémité libre (14), est moulé un loquet, qui est dirigé vers l'espace interne (6) du renfoncement de retenue (3), dans lequel, dans la région de l'extrémité libre (14) du premier élément de retenue (13), une paroi de boîtier (16) est disposée sur le côté à l'opposé de l'espace interne (6) du renfoncement de retenue (3), dans lequel la paroi de boîtier (16) et l'extrémité libre (14) du premier élément de retenue (13) sont espacées l'une de l'autre.

8. Agencement de boîtier (1) selon l'une des revendications 6 ou 7, **caractérisé en ce que** le moulage surélevé (12) de la section de retenue (10) et le loquet (15) du premier élément de retenue (13) sont disposés l'un par rapport à l'autre et par rapport à la section de retenue (5) de telle manière que le moulage surélevé (12) et le loquet (15) agissent sur le stockage d'énergie électrique (2) dans la région d'un demi-cercle supérieur (17) tandis que la section de retenue (5) agit sur un demi-cercle inférieur (18).

9. Agencement de boîtier (1) selon l'une des revendications précédentes, **caractérisé en ce que** l'élément de compensation de tolérance (19) se présente essentiellement sous la forme d'une attache et comprend une première patte (20) et une seconde patte (21) qui sont couplées à travers une base (22), la première patte (20) de l'élément de compensation de tolérance (19) étant conçue pour être supportée sur la paroi de boîtier (16), dans lequel la patte (20) et la paroi de boîtier (16) sont formées de manière correspondante dans leur région de contact, dans lequel la seconde patte (21) agit sur l'extrémité libre (14) du premier élément de retenue (13), dans lequel la seconde patte (21) et l'extrémité libre (14) sont formées de manière correspondante dans leur région de contact.

10. Agencement de boîtier (1) selon la revendication 9, **caractérisé en ce que** les pattes (20, 21) de l'élément de compensation de tolérance (19) sont montées de force et/ou par complémentarité de forme sur l'élément de recouvrement (4), leur côté s'écartant de la base (22).

11. Agencement de boîtier (1) selon l'une des revendications précédentes, **caractérisé en ce que**, dans la région d'une seconde face avant (26) du stockage d'énergie électrique (2), un second élément de retenue (27) est moulé dans la section de retenue (5) du renfoncement de retenue (3), ou est moulé d'un seul tenant avec celle-ci, dans lequel le second élément de retenue (27) comporte au moins des sections élastiques et fait saillie sous la forme d'une languette, une extrémité libre (28) étant dirigée vers l'élément de recouvrement (4), dans lequel, au niveau de l'extrémité libre (28), est moulé un loquet (29) qui est dirigé vers la seconde face avant (26) du stockage d'énergie électrique (2).

12. Agencement de boîtier (1) selon l'une des revendications 2 à 11, **caractérisé en ce que**, dans une position de service de l'agencement de boîtier (1) ayant un élément de recouvrement (4) fermé, un élément de compensation de tolérance supplémentaire (30) est monté de force et/ou par complémentarité de forme sur un moulage surélevé (34) de l'élément de recouvrement (4), dans lequel l'élément de compensation de tolérance supplémentaire (30) se présente essentiellement sous la forme d'une attache et comprend une première patte (31) et une seconde patte (32) qui sont couplées à travers une base (33), dans lequel, en position de service, l'élément de compensation de tolérance supplémentaire (30) est monté sur le moulage surélevé (34) de telle manière que le moulage surélevé (34) soit disposé entre les pattes (31, 32).
